Europäisches Patentamt

(19) European Patent Office

Office européen des brevets

(11) Publication number : **0 304 390 B1**

## EUROPEAN PATENT SPECIFICATION

(45) Date of publication of patent specification :
**15.01.92 Bulletin 92/03**

(21) Application number : **88710014.7**

(22) Date of filing : **10.06.88**

(51) Int. Cl.⁵ : **B62D 55/08,** B62D 55/12, B62D 55/24, B62D 55/20, B62D 55/14

(54) Traction device with rubber track.

(30) Priority : **12.06.87 JP 146357/87**

(43) Date of publication of application :
**22.02.89 Bulletin 89/08**

(45) Publication of the grant of the patent :
**15.01.92 Bulletin 92/03**

(84) Designated Contracting States :
**DE FR GB IT**

(56) References cited :
**CH-A- 350 200**
**DE-A- 3 523 528**
**DE-C- 466 116**
**US-A- 3 575 474**
**PATENT ABSTRACTS OF JAPAN, vol. 9, no. 114 (M-380)[1837], 18th May 1985; & JP-A-60 1082 (FUKUYAMA GOMU KOGYO K.K.) 07-01-1985**

(73) Proprietor : **Bridgestone Corporation 10-1, Kyobashi 1-Chome Chuo-Ku Tokyo 104 (JP)**

(72) Inventor : **Uchida, Shinji 827 Kashio-cho Totsuka-ku Yokohama-shi Kanagawa-ken (JP)**
Inventor : **Furuta, Mitsuo 20-22 Higashinakahara 1-chome Hiratsuka-shi Kanagawa-ken (JP)**

(74) Representative : **Huss, Carl-Hans, Dipl.-Ing. Patentanwalt Griesstrasse 3 a Postfach 14 54 W-8100 Garmisch-Partenkirchen (DE)**

## Description

## BACKGROUND OF THE INVENTION

Field of the Invention :

The present invention relates to a rubber crawler system comprising an endless rubber-made belt-like crawler shoe in which many cores are embedded at the bases thereof perpendicularly to the longitudinal direction of the crawler shoe and parallelly to each other, and rollers rolling on the crawler shoe, each of the cores having provided thereon roller guides protruded inwardly from the inner circumference of the crawler shoe and so formed that the rollers of a vehicle roll on the guide projections to prevent the rollers from disengaging from the rollers.

Description of the Prior Art :

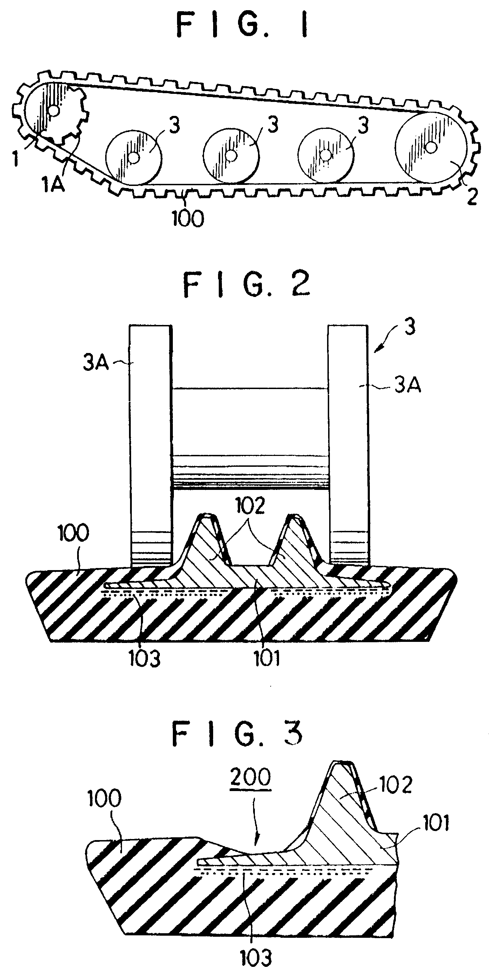

The known crawler system of Figures 2 and 3 comprises an endless rubber-made belt-like crawler shoe 100 which is used as extended over a sprocket 1 and idler tumbler 2 of a vehicle as shown in Fig. 1 and on the inner circumference of which rollers 3 between the sprocket 1 and idler tumbler 2 roll. Also as shown in Fig. 2, many cores 101 have the bases thereof embedded in the crawler shoe 100 perpendicularly to the longitudinal direction of the crawler shoe 100, and have roller guides 102 formed thereon as protruded inwardly from the inner circumference of the crawler show 100. Further, a tensile reinforcing member 103 such as steel cord or the like is embedded in the crawler shoe 100 in such a manner as surrounds the outer circumferences of the cores 101. Wheels 3A in pair composing each roller 3 roll on the inner circumferences of the crawler shoe 100 that are outside the guide projections or roller guides 102, respectively.

The rubber crawler system in which the wheels 3A of the roller 3 roll outside the roller guides 102 is disadvantageous in that as the crawler shoe surface on which the rollers roll are fatigued, the rubber is broken so that finally the cores 101 in the rubber are exposed and corroded by the incoming water. Further, the rusty cores 101 become fragile and broken with the result that the tensile reinforcing member 103 is broken. In the crawler shoe portions on which the wheels 3A of the roller 3 roll, the rubber is damaged as shown in Fig. 3 and water and mud penetrate into the damaged portions indicated with a reference numeral 200. The rolling of the roller wheels 3A causes the damage 200 in only the upper portion of the core 101, not between the cores 101. This is because the thickness of the rubber on the core 101 is smaller than that of the rubber between the cores 101. To prevent the damage 200 from taking place, it suffices to increase the thickness of the rubber on the core 101. However, this countermeasure needs a considerably increased amount of rubber for manufacturing the crawler shoe 100 and is infeasible in practice.

## SUMMARY OF THE INVENTION

The present invention has an object to overcome the above mentioned drawbacks of the conventional rubber crawler system by providing a rubber crawler system of which the crawler shoe portion on the core has an improved rigidity and in which a reduced load is applied to the crawler shoe.

The above object can be accomplished by providing a rubber vehicle crawler system comprising, according to the present invention, an endless rubber-made belt-like crawler shoe in which many cores are embedded at the bases thereof perpendicularly to the longitudinal direction of the crawler shoe and parallely to each other, each of the cores having provided thereon roller guide projections protruded inwardly from the inner circumference of the crawler shoe and rollers rolling on the inner circumference of said crawler shoe, composed each of a cylindrical body and flanges formed on at least one outer circumferential end thereof, characterized in that the cylindrical body of the rollers roll on the guide projections and the flanges roll on the inner circumference of said crawler shoe when each roller is between two adjacent cores of said crawler shoe and is not supported by the guide projections.

In the rubber vehicle crawler system according to the present invention, when the rollers are on the guide projections, the cylindrical body thereof rides on the tops of the guide projections so that the weight of a vehicle and the rollers themselves is supported on the guide projections, and when the rollers are off the guide projections, the inner circumference of the crawler shoe and flanges of the rollers get into contact with one another and the weight of the vehicle and rollers is supported on the crawler portions having the rubber of a large thickness. Therefore, according to the present invention, it is possible to provide a rubber crawler system of which the crawler shoe is not easily damaged at the inner circumference thereof by the rollers but is highly durable.

These and other objects and advantages of the present invention will be better understood from the ensuing description made by way of example of the embodiments of the present invention with reference to the drawings.

## BRIEF DESCRIPTION OF THE DRAWINGS

Fig. 1 is a schematic side view showing the general structure of the crawler system ;
Fig. 2 is a sectional view showing a conventional rubber crawler system ;
Fig. 3 is a sectional view for explanation of the disadvantages of the conventional rubber crawler system ;

Fig. 4 is a sectional view showing an preferred embodiment of the present invention ;

Fig. 5 is a front view of the roller used in the rubber crawler system of the present invention ;

Fig. 6 is a sectional view taken alone the line III-III in Fig. 5 ;

Fig. 7 is an explanatory drawing showing the extended length of the roller flange ;

Fig. 8 is a sectional view to explain the height from the inner circumference of the crawler shoe to the top of the roller guide ;

Figs. 9 to 11 are sectional views taken along the line X-X in Fig. 8 and showing variants of core, respectively ;

Fig. 12 is an explanatory drawing explaining how the weight is applied to the crawler when the roller rolls thereon ;

Fig. 13 is a sectional view showing another embodiment of the present invention ;

Fig. 14 is a sectional view showing a yet another embodiment of the present invention ;

Fig. 15 is a plane view from inside the crawler shoe ; and

Figs. 16 and 17 are schematic side views of variants of crawler shoe, respectively.

## DETAILED DESCRIPTION OF THE PREFERRED EMBODIMENTS

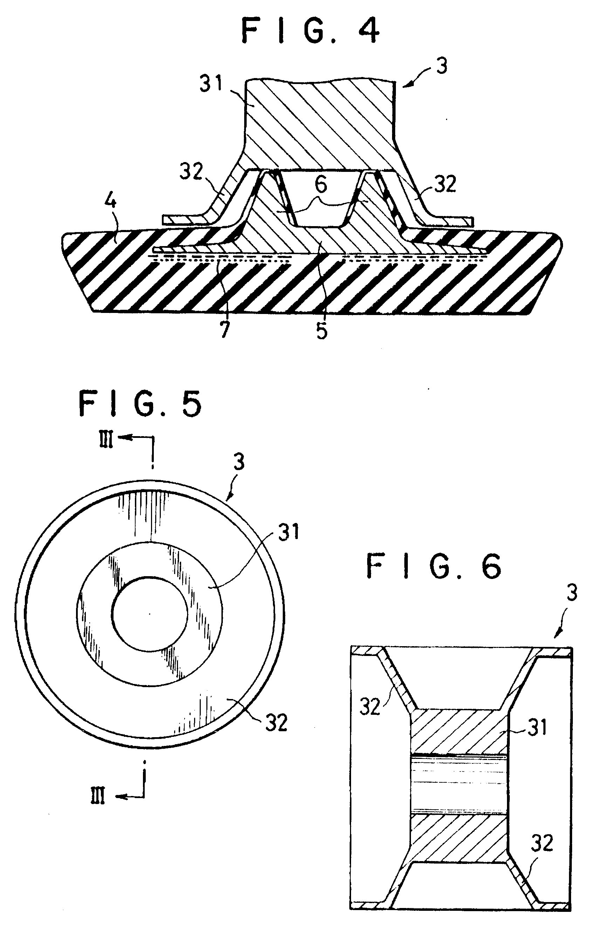

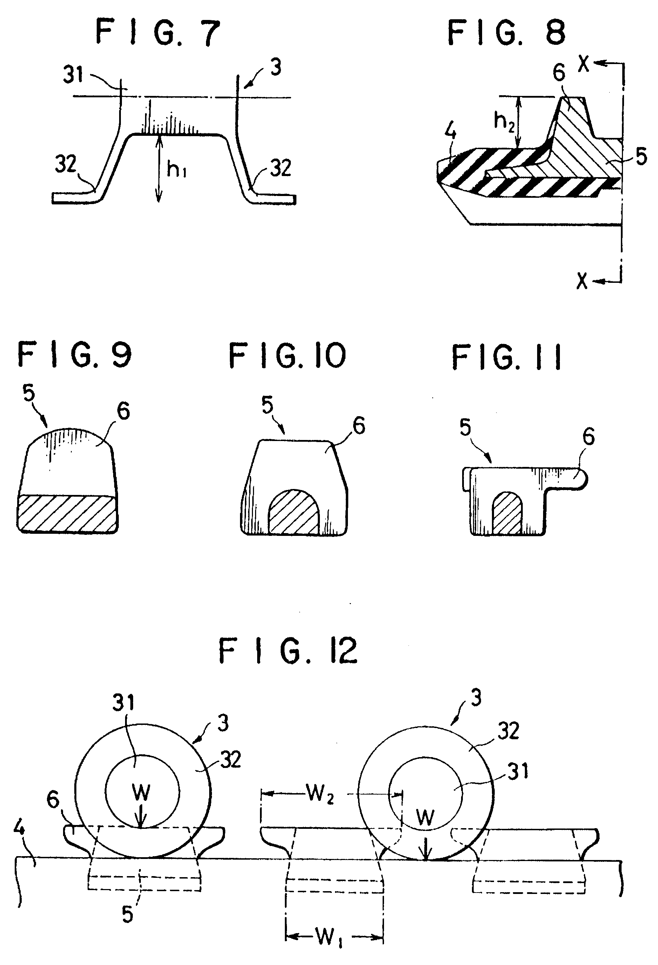

Referring now to Fig. 4, the rubber crawler system according to the present invention comprises rollers 3 each consisting of a cylindrical body 31 and a pair of flanges 32 formed on either outer circumferential ends thereof. The rubber crawler system according to the present invention also comprises an endless rubber-made belt-like crawler shoe 4 in which many cores 5 are embedded as in the conventional rubber crawler shoes, the cores 5 each having formed thereon roller guides 6 as protruded inwardly from the inner circumference of the crawler shoe 4. When the roller 3 is on the core 5, the outer circumference of the cylindrical body 31 is in contact with the tops of the roller guides or guide projections 6. In this state, the flanges 32 slightly touch or is somewhat away from the inner circumference of the crawler shoe 4. When the roller 3 disengages from the core 5, the flanges 32 get into contact with the inner circumference of the crawler shoe 4. The roller 3 is detailedly shown in Figs. 5 and 6. Assume that the height from the top of the guide projection 6 of the core 5 to the inner circumference of the crawler shoe 4 is $h_2$ and the height from the outer circumference of the cylindrical body 31 of the roller 3 to the end of the flange 32 extending outwardly is $h_1$ (as shown in Figs. 7 and 8).

The roller guides or guide projections 6 may be built in a variety of forms, for example, as shown in Figs. 9 to 11. The guide projection 6 shown in Fig. 9 has a circular top for facilitating the cylindrical body 31 of the roller to easily roll thereon. The guide projection 6 shown in Fig. 10 has a flat top. The guide projection 6 shown in Fig. 11 has a top extended longitudinally of the crawler shoe 4, and these guide projections 6 are disposed as staggered on the crawler shoe 4.

Fig. 12 shows the rollers 3 of which the one is on the core 5 and the other lies between the cores 5. The guides 6 of these cores 5 are formed as extended longitudinally of the crawler shoe 4 for the cylindrical body 31 of the roller 3 to roll over a longer distance. If the roller 3 goes off the core 5, the flanges 32 will roll in contact with the inner circumference of the crawler shoe 4. Assure that the base length of the core 5 is $w_1$ and top length of the guide projection 6 is $w_2$. It is preferable from the standpoint of durability that $w_2$ should be longer than $w_1$.

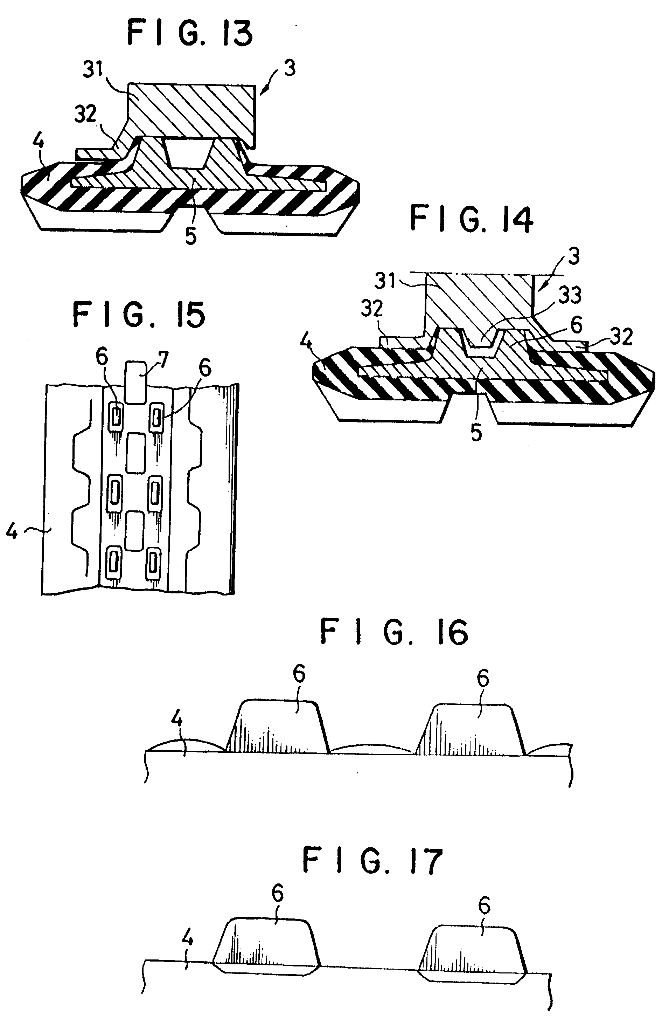

Fig. 13 shows another embodiment of the present invention. A roller 3 in which a flange 32 is formed on only one outer circumferential edge of the cylindrical body 31 is shown in this Figure. In a yet another embodiment of the present invention shown in Fig. 14, the roller 3 has a rib 33 formed near the center of the outer circumference of the cylindrical body 31, and between the flanges 32 in pair, thereof. Recesses are formed between one flange 32 and the rib 33 and between the other flange 32 and the rib 33, respectively, and the guide projections 6 enter the respective recesses.

In an embodiment shown in Fig. 15, the inner circumferences of the crawler shoe 4 where the flanges 32 roll are formed wide transversely of the crawler shoe 4. As seen in Fig. 15, there are formed along the center line of the crawler shoe 4 holes 7 in which teeth 1A of the sprocket 1 shown in Fig. 1 are to be engaged.

In an embodiment shown in Fig. 16, the inner circumferences of the crawler shoe 4 on which the flanges 32 roll are formed as heaped up. Fig. 17 shows an embodiment in which the inner circumferences of the crawler shoe 4 outside the roller guides 6 of the cores 5 are formed as lowered.

## Claims

1. A rubber vehicle crawler system, comprising an endless rubber-made belt like crawler shoe (4) in which many cores (5) are embedded at the bases thereof perpendicularly to the longitudinal direction of the crawler shoe (4) and parallely to each other, each of the cores having provided thereon roller guide projections (6) protruded inwardly from the inner circumference of the crawler shoe (4) and rollers (3) rolling on the inner circumference of said crawler shoe (4), composed each of a cylindrical body (31) and flanges (32) formed on at least one outer circumferential end thereof, characterized in that the cylindrical body (31) of the rollers (3) roll on the guide projections (6) and the flanges (32) roll on the inner circumference of said crawler shoe when each roller is between two adjacent cores (5) of said crawler shoe (4) and is not supported by the guide projections (6).

**Patentansprüche**

1. Gummiraupenfahrzeugsystem, bestehend aus einer endlosen bandförmigen Gummiraupe (4), in die rechtwinklig zu ihrer Längsrichtung eine Vielzahl von Kernstücken (5) mit ihren Basen parallel zueinander eingebettet ist, die jedes vom Innenumfang der Raupe (4) nach innen abstehende Rollenführungen (6) aufweist, und aus auf dem Innenumfang der Raupe abrollenden Rollen (3), die jede aus einem zylindrischen Körper (31) und aus mindestens einem an einer Umfangskante desselben angeformten Flansch (32) zusammengesetzt ist, dadurch **gekennzeichnet**, daß der zylindrische Körper (31) der Rollen (3) auf den Rollenführungen (6) abrollt und die Flansche (32) auf dem Innenumfang der Raupe (4) abrollen, wenn jede Rolle (3) sich zwischen zwei nebeneinanderliegenden Kernstücken (5) der Raupe (4) ohne Unterstützung durch die Rollenführungen (6) befindet.

**Revendications**

1. Un système de traction pour véhicule à chenilles en caoutchouc, comprenant une semelle de chenille en caoutchouc en forme de courroie sans fin (4) dans laquelle de nombreux noyaux (5) sont noyés à leur base de manière perpendiculaire à la direction longitudinale de la semelle de chenille (4) et parallèlement l'un à l'autre, chacun des noyaux présentant dessus des saillies (6) de guidage de rouleaux faisant saillie vers l'intérieur par rapport à la périphérie interne de la semelle de chenille (4) et des rouleaux (3) roulant sur la périphérie interne de ladite semelle de chenille (4), composés chacun d'un corps cylindrique (31) et de flasques (32) formés sur au moins une extrémité périphérique externe de ceux-ci, caractérisé en ce que le corps cylindrique (31) des rouleaux (3) roule sur les saillies de guidage (6) et que les flasques (32) roulent sur la périphérie interne de ladite semelle de chenille lorsque chaque rouleau se trouve entre deux noyaux adjacents (5) de ladite semelle de chenille (4) et n'est pas supporté par les saillies de guidage (6).

EP 0 304 390 B1

# F I G. I

# F I G. 2

# F I G. 3

# F I G. 4

# F I G. 5

# F I G. 6

# F I G. 7

# F I G. 8

# F I G. 9

# F I G. 10

# F I G. 11

# F I G. 12

EP 0 304 390 B1

FIG. 13

FIG. 14

FIG. 15

FIG. 16

FIG. 17

8